(19) Europäisches Patentamt / European Patent Office / Office européen des brevets

(11) **EP 1 785 400 A1**

(12) **DEMANDE DE BREVET EUROPEEN**

(43) Date de publication:
**16.05.2007 Bulletin 2007/20**

(51) Int Cl.:
***C02F 3/12*** *(2006.01)*

(21) Numéro de dépôt: **05292393.5**

(22) Date de dépôt: **10.11.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(71) Demandeur: **Halter Hydro Environnement 45510 Vienne en Val (FR)**

(72) Inventeur: **Labbe, Thierry 45510 Vienne en Val (FR)**

(74) Mandataire: **Debay, Yves Cabinet Debay, 126 Elysée 2 78170 La Celle Saint Cloud (FR)**

(54) **Procédé de lestage de boues activées**

(57) L'invention permet à partir d'un procédé de lestage spécifique de boues activées d'améliorer le fonctionnement des stations d'épuration. Le procédé comporte une étape de mélange avec la biomasse (5) d'une substance minérale pulvérulente pour former un floc mixte de densité supérieure à l'eau et caractérisé en ce que la substance minérale comprend avantageusement des particules à base de magnésium et/ou de calcium dans une structure cristalline, permettant la libération progressive dans le milieu biologique des cations de magnésium et/ou de calcium, ainsi que des anions hydroxyde et/ou carbonate, la granulométrie des particules de ladite substance étant inférieure à 50 $\mu$m et supérieure à 5$\mu$m.

La dissociation de la substance minérale, utile au milieu biologique, reste suffisamment faible pour ne pas affecter le principe même du lestage. Le magnésium et/ou le calcium ainsi que les carbonates ajoutés aux boues activées (6) représentent un amendement basique agricole de choix.

**Figure 1**

EP 1 785 400 A1

**Description**

La présente invention se rapporte au domaine du traitement des eaux usées, et concerne plus particulièrement un procédé de lestage de boues activées afin d'optimiser le fonctionnement des stations d'épuration.

Les stations d'épuration à boues activées sont actuellement très nombreuses dans tous les pays développés. Les eaux usées sont préalablement dessablées et dégraissées pour être conduites dans un bassin d'activation où la dégradation biologique est effectuée par des bactéries. Les bactéries ou micro-organismes forment des flocons de biomasse de densité proche de l'eau appelés « boues activées ». Pour obtenir une eau clarifiée, les eaux épurées doivent ensuite être séparées de ces boues activées dans un ouvrage de décantation appelé ci-après « clarificateur » ou décanteur secondaire.

Les stations d'épuration à boues activées sont très souvent confrontées à des difficultés de décantation de leur biomasse, dues le plus souvent à la présence excessive de germes filamenteux. Ces derniers, de manière connue, s'opposent à l'épaississement statique de la biomasse et rend la décantation particulièrement difficile ou impossible dans le clarificateur (filière eau) et dans le concentrateur (filière boue). Ce problème touche plus de 25% des installations de traitement (données CEMAGREF Canler-Pujol).

Ces incidents de décantation sont à l'origine de problèmes très sérieux puisqu'une partie de la boue activée peut être entraînée avec l'effluent traité. Ces pertes de boues ont un fort impact sur l'écosystème, en particulier sur le niveau d'oxygénation du milieu récepteur ; la mortalité de la faune aquatique est très souvent importante et des pénalités doivent être payées, une procédure judiciaire pouvant être engagée. Une surcharge hydraulique ou un clarificateur sous-dimensionné peuvent conduire aux mêmes conséquences, la station d'épuration ne retenant plus ses boues.

Il existe donc un besoin d'améliorer le processus de décantation pour que soit respectée la condition essentielle suivante : le maintien d'une quantité de biomasse nécessaire au traitement dans le dispositif en évitant toute fuite vers le milieu naturel.

De plus, l'état de fraîcheur de la biomasse stockée dans le clarificateur ou dans l'épaississeur ainsi que la qualité de l'eau traitée sont fortement influencés par la vitesse de décantation. En améliorant ce processus, le temps de séjour des boues dans l'ouvrage est réduit et alors on évite la formation de composés réducteurs dont on sait qu'ils représentent le substrat privilégié de nombreux germes filamenteux et dégradent la qualité de l'eau traitée.

Un autre aspect tout aussi important concerne la fiabilité de la filière d'évacuation des déchets (les boues en excès). Si les épandages sur les terres agricoles représentent souvent le meilleur choix en terme de valorisation au moindre coût (60 % du débouché et probablement plus encore dans les années à venir avec l'interdiction de mise en décharge et la baisse du revenu agricole), cette pratique ne peut être pérennisée sans le soutien des agriculteurs car le contexte médiatique est peu favorable à cette technique pourtant encouragée par les pouvoirs publics ; c'est pourquoi il existe un besoin d'améliorer la valeur agronomique des boues épandues afin de s'attacher les faveurs du monde agraire.

Il est connu dans l'art antérieur d'autres techniques de lestage des boues activées, qui ont rencontré peu de succès dans leur développement. Seuls les talcs LUZENAC ont dépassé le stade expérimental pour venir s'imposer sur ce segment du marché de l'assainissement. Le brevet EP 0 688 303 ou son équivalent US 5 759 403 divulgue l'utilisation d'une telle poudre de talc (silicate de magnésium) ou de pyrophyllite (silicate d'aluminium) ou encore de mica (silicate d'aluminium et de potassium) que l'on mélange à la biomasse de façon à former des flocs mixtes de densité supérieure à celle de l'eau.

Toutefois, les quantités importantes mises en oeuvre, nécessaires à l'obtention de résultats significatifs, associées au coût élevé du réactif, limitent les ambitions commerciales de ce type de procédé en le réservant à des situations critiques ou ingérables.

La demande de brevet FR 1 816 611 révèle un procédé de lestage à partir de cendres silico-alumineuses. Ces cendres forment une substance relativement abrasive, qui contient souvent des métaux lourds, (Cd en particulier), et leur granulométrie est élevée (jusqu'à 200 $\mu$m). Il est connu également un silicate de magnésium modifié, le Gulsenit K, très coûteux comme lestant.

De plus, les caractéristiques du talc ou disilicate analogue, inerte chimiquement, ne valorisent pas les boues dans le milieu agricole.

Il est connu dans l'art antérieur, dans le domaine du traitement des eaux usées, des procédés consistant à injecter du lait de chaux (hydroxyde de calcium) afin de précipiter les bicarbonates naturellement présents dans le milieu biologique sous forme de carbonate de calcium, ce dernier servant de support à la biomasse (brevet DE 4 207 560). Le but recherché est de faire disparaître les bicarbonates au profit des carbonates, ce qui peut apparaître comme préjudiciable sous l'angle de l'abaissement du pouvoir tampon pH du milieu biologique. Les flocons de carbonate de calcium précipités sont proches d'un état colloïdal et présentent un risque d'entartrage sur les parois des bassins, des canalisations et des diffuseurs poreux.

Il est connu par ailleurs des techniques consistant à injecter du carbonate de calcium ou de sodium dans la station d'épuration. Le but recherché est alors de créer une réaction entre les ions carbonates et l'acidité du milieu afin de relever le TAC du milieu biologique (Titre Alcalimétrique Complet, caractérisant le pouvoir tampon de l'eau). Le lieu d'injection s'effectue préférentiellement sur l'eau brute et consiste à dissoudre intégralement le produit minéral. Dans ce type de techniques, le carbonate de calcium utilisé possède une granulométrie très fine (inférieure ou égale à 5 $\mu$m) et plutôt sous une forme micro cristalline comme la craie afin d'augmenter la réactivité de la matière minérale avec le milieu aqueux. Une granulométrie moins fine doit être évitée sous peine d'obtenir une faible réactivité et la dose injectée est très réduite, compte-tenu de l'objectif recherché. Une injection d'une quantité trop importante de ce carbonate de calcium aurait évidemment un effet néfaste sur l'effluent traité (trop forte turbidité) alors que la solubilité carbonique du réactif, trop élevée, diminuerait la pérennité des particules tout en présentant un risque d'entartrage. Il est d'ailleurs connu par le brevet EP 0 688 303 ou son équivalent US 5 759 403, que sous cette forme, le carbonate de calcium n'est pas un bon agent lestant ; il a en effet été testé et n'a pas été retenu à cause de son inefficacité.

Piirtola et al, au travers d'une publication intitulé «activated sludge ballasting in batch test » ont également testé des carbonates de calcium et de magnésium sous la forme de calcaire et de dolomie sans préciser la structure des particules dont la granulométrie est particulièrement élevée puisqu'elle peut atteindre 2 mm (ce qui ne serait pas sans poser des problèmes de sédimentation au fond du bassin d'aération). Ils énoncent, après avoir essayé seulement deux carbonates de calcium, qu'aucune différence significative n'est perçue entre les différentes espèces de carbonates de calcium et que ces substances sont bien moins efficaces que PE 8418 (le nom commercial est « AQUATAL® » de la société Talc de Luzenac). Il n'est pas fait état du risque d'entartrage lié à la solubilité excessive de certains calcaires ni du bénéfice de ces particules sur l'amendement basique et calcique ou magnésien des boues dans le cadre de leur valorisation en agriculture ou de l'économie réalisée en réduisant sensiblement le chaulage.

Le brevet JP 04 235793 au travers de l'enseignement de son abrégé, vise uniquement à favoriser la formation rapide d'un floc riche en micro-organismes. Il repose sur un principe, bien connu en traitement d'eau potable, qui consiste à créer un floc physico-chimique (et non pas biologique) en utilisant une charge constituée d'une poudre minérale jouant le rôle d'entraîneur (sweep-coagulation), un électrolyte constitué d'un sel soluble de fer ou d'aluminium et d'un floculant, qui va jouer le rôle de liant entre ces divers constituants (CMC dans le cas du procédé). Cette composition va fixer les particules organiques ou les colloïdes ; les bactéries ou les micro-organismes ne représentent finalement qu'un exemple particulier de matière organique. Les caractéristiques de surface des matériaux pulvérulents importent peu et l'on peut tout aussi bien utiliser des substances hydrophiles électronégatives ou électropositives qu'hydrophobes et neutres. Cette composition physico-chimique complexe n'est pas très favorable au développement des bactéries car les électrolytes vont précipiter très rapidement sous forme d'hydroxyde de fer ou d'aluminium en acidifiant le milieu et en consommant beaucoup de bicarbonate. L'apport supplémentaire éventuel de particules carbonatées ne présente d'intérêt que dans cette fonction de neutralisation et en remontant le TAC.

Dans le même esprit, un brevet hongrois utilise en guise de charge du micro-sable (20 à 140 $\mu$m) alors que les caractéristiques de surface des particules (très hydrophiles et très électronégatives) les rendraient inadaptées dans une fonction de lestage de boue activée ou l'on recherche une affinée maximale entre les particules minérales et la biomasse. C'est à dire en évitant justement ces deux propriétés.

Le but de la présente invention est de proposer un procédé de lestage d'une efficacité comparable ou supérieure à la référence des agents lestant (AQUATAL®) et permettant d'éviter les inconvénients de l'art antérieur, en facilitant la valorisation ultérieure des boues dans le milieu agricole tout en optimisant le traitement biologique et la qualité du rejet, au bénéfice de l'environnement.

Le problème inédit en soi résolu par la présente invention est plus spécifiquement de trouver un principe de lestage différent où l'on cherche à fixer des particules minérales sur un floc biologique déjà constitué. A l'inverse, les modes de réalisation des deux derniers enseignements susmentionnés sont éloignés et même opposés car on recherche dans ce cas à créer un floc physico-chimique susceptible de fixer des micro-organismes.

Le but de l'invention est atteint par un procédé de lestage de boues activées pour séparer/favoriser la décantation d'une biomasse constituée de micro-organismes épurateurs d'une eau traitée biologiquement et permettant d'améliorer la valeur agronomique des boues, comprenant une étape de mélange avec la biomasse d'au moins une substance minérale pulvérulente pour former un floc mixte de densité supérieure au floc d'origine, caractérisé en ce que la substance minérale est constituée de particules à base de calcium et/ou magnésium, associées dans une structure cristalline, rhomboédrique, à du carbonate et permettant, en opposant une résistance suffisante à la solubilité, la libération progressive en milieu aqueux de cations de magnésium et/ou de calcium, ainsi que des anions carbonate, les particules de ladite substance minérale ayant une granulométrie déterminée correspondant à une distribution caractéristique de particules comprises dans l'intervalle [ 5-40$\mu$m ]. Leurs mélanges en toutes proportions avec la biomasse ne peuvent engendrer un pH supérieur à 8,3.

La dissociation de la substance minérale, utile au milieu biologique, reste suffisamment faible (la dissolution est particulièrement progressive dans la durée) pour ne pas, d'une part, remettre en cause la pérennité des particules et par voie de conséquence le principe même du lestage, ni d'autre part provoquer des problèmes d'entartrage. Une grande quantité du réactif de départ rejoint alors la filière boue au bénéfice de l'agriculteur et de l'exploitant de la station d'épuration qui pourra réduire sa consommation de chaux ou/et augmenter la valeur fertilisante et la siccité des boues. La chaux ou la dolomie semi calcinée (procédé Lhoist) ne peuvent pas être utilisées comme lestant compte tenu de l'élévation de pH résultant, incompatible avec la survie ou la croissance de la biomasse alors que le magnésium ou/et le calcium associé(s) aux carbonates et ajouté(s) aux boues activées au niveau du traitement biologique grâce à l'invention est totalement compatible et représente un amendement basique de choix pouvant se substituer dans une large mesure à la chaux. Cette dernière ne peut être introduite en quantité suffisante qu'au niveau du traitement des boues ou après. La valeur neutralisante et calcique des carbonates peut représenter en équivalent plus de 50% du poids de chaux vive ou près de 75% de chaux éteinte.

Selon une autre particularité, la formation du floc mixte est réalisée à partir d'une substance à mélanger ayant une densité comprise entre 2,6 et 3 g/cm³ et comprenant au moins un des composés suivants sous une forme cristallisée :

- calcite ;
- dolomite ;
- magnésite.

Selon une autre particularité, la biomasse est mélangée avec une substance minérale de densité comprise entre 2,6 et 3 g/cm³, dont la structure cristalline est rhomboédrique, et ayant une formule générale type :

$$Ca_xMg_y(CO_3)_z \text{ où } x+y = z$$

où x et y ne sont pas nécessairement des entiers naturels.

Selon une autre particularité, la biomasse est mélangée avec une substance minérale supplémentaire appelée brucite d'une densité de 2,4 g/cm³, dont la structure cristalline est rhomboédrique, et ayant une formule générale du type $Mg(OH)_2$.

Selon une autre particularité, la substance minérale est introduite en une ou plusieurs fois dans un système biologique incluant la biomasse, la quantité de substance minérale introduite étant ajustée pour représenter de 0,3 à 3 fois la masse de boue biologique, exprimée en matière volatile sèche, présente dans le système biologique.

Le procédé peut s'appliquer dans une station d'épuration et la substance minérale pulvérulente est préparée pour être utilisée à l'état de suspension sous forme d'un lait minéral, l'eau de la suspension pouvant avantageusement être remplacée par la liqueur d'aération de la station. Une étape d'injection ou de pulvérisation est réalisée avec cette suspension pour traiter la biomasse.

Selon une autre particularité, les particules minérales utilisées sont calibrées autour d'une valeur de référence de l'ordre de 15 μm (par exemple entre 8 et 22 μm).

Selon une autre particularité, un coagulant cationique organique est associé à la substance minérale.

Le coagulant cationique organique est choisi préférentiellement à forte densité de charge et à faible poids moléculaire et introduit dans le milieu biologique à un instant quelconque du procédé (soit juste avant et/ou pendant et/ou après l'injection de la substance minérale). Le choix sélectif du coagulant est dicté par la nécessité de conserver aux flocons de biomasse leurs qualités de base (réversibilité de la coalescence, densité massique élevée et faible résistance au cisaillement). On favorisera la coagulation de type mosaïque en limitant les phénomènes de pontage.

Selon une autre particularité, le procédé selon l'invention est utilisé pour diminuer la production de boue d'une installation d'épuration à boues activées.

Selon une autre particularité, le procédé selon l'invention est utilisé pour favoriser le séchage des boues déshydratées (augmentation de la vitesse de séchage des boues déshydratées).

D'autres particularités et avantages de la présente invention apparaîtront plus clairement à la lecture de la description ci-après faite en référence aux dessins annexés dans lesquels :

- la figure 1 représente de façon schématique une façon d'injecter l'agent lestant selon l'invention dans le bassin d'aération ;
- la figure 2 représente de façon schématique le clarificateur et son environnement ;
- la figure 3 montre un diagramme illustrant la relation entre le volume corrigé et la vitesse ascensionnelle limite du clarificateur pour un décanteur à flux vertical selon le CTGREF (1979).

Le lestage des boues activées au moyen de particules minérales sélectionnées est une technique particulièrement efficace, rapide et sûre pour améliorer très sensiblement la sédimentation des boues activées. Cette méthode permet de répondre très favorablement et de manière prévisible à des incidents de décantation de toutes natures en évitant ou en jugulant les pertes de boues.

Un des intérêts du lestage, c'est qu'il agit de manière prévisible, en renforçant les propriétés de sédimentation de la biomasse (5), même si cette dernière décante normalement. On mesure toute l'importance de cette fonctionnalité dont le bénéfice se traduit par un gain sur les limites de la capacité épuratoire des dispositifs à boues activées qui peuvent alors être reculées ou sur la compacité des ouvrages, moyennant une augmentation de la concentration en biomasse du bassin d'aération ; le clarificateur (2) peut alors accepter cette contrainte supplémentaire sans risque de pertes de boue (la puissance des aérateurs doit simplement être adaptée en conséquence).

L'originalité et le caractère novateur du procédé selon l'invention repose également sur une approche globale de la problématique d'une station d'épuration car la nature de la charge minérale satisfait également aux exigences physico-chimiques et biologiques du milieu et à la finalité des boues produites en excès. Selon l'enseignement surprenant de la présente invention, le choix sélectif de l'agent lestant s'effectue parmi la calcite (marbre), la dolomite, la magnésite, la brucite. Il a été découvert que de tels composés, une fois sélectionné suivant les principes de l'invention et utilisés comme agent lestant des boues activées permettent d'améliorer très sensiblement les rendements de la station d'épuration ; et alors, en densifiant les flocs et en réduisant le volume excessif des flocons de biomasse (expansés par les germes filamenteux) au cours de la phase de coalescence, on peut accroître la capacité hydraulique de plus de 50% en quelques heures. Cette dernière réaction va évoluer favorablement dans les jours suivant l'injection car une fraction des particules situées en périphérie des flocs par coagulation de type mosaïque, va progressivement migrer au coeur des flocs en liaison beaucoup plus intime et plus forte avec les micro-organismes. Cette configuration où les particules sont à la fois au coeur et en surface du floc est la plus efficace en terme de décantation mais également pour un traitement de déshydratation optimisée des boues.

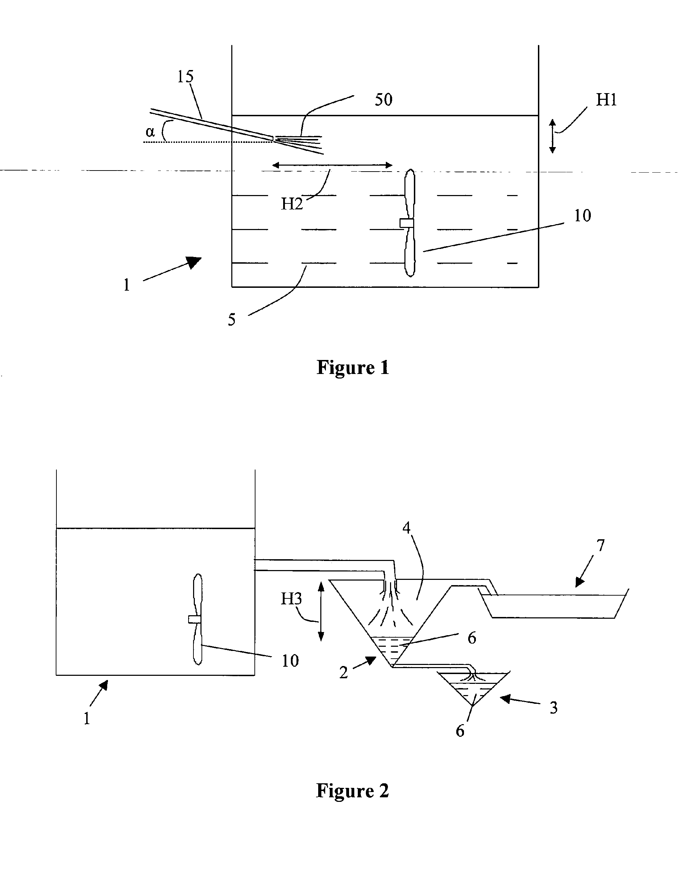

L'invention va à présent être décrite en référence aux figures 1 et 2.

Le procédé de lestage selon l'invention s'applique aux boues activées afin de séparer l'eau traitée biologiquement de la biomasse incluant les micro-organismes épurateurs. Dans les stations d'épuration classiques utilisant des boues activées, le clarificateur (2) sert à séparer en surface l'eau traitée (4) de la biomasse (5), tandis que le fond du clarificateur (2) contient les boues (6), qui sont plus denses et doivent par exemple être acheminées vers un concentrateur (3) en vue de leur valorisation. En général, la majorité des boues (6) est re-circulée en tête du bassin d'aération (1).

Le procédé de lestage comprend, comme illustré à la figure 1, une étape de mélange avec la biomasse (5) d'au moins une substance minérale pulvérulente carbonatée pour former un floc mixte de densité supérieure à l'eau et au floc d'origine. Dans un mode de réalisation préféré de l'invention, la substance minérale comprend des particules du type à base de l'élément calcium qui peut être combiné avec le magnésium et associé aux carbonates. Cette substance minérale a une forte structure cristalline qui permet avantageusement, par dissociation, de libérer de façon progressive en milieu aqueux des cations de magnésium et/ou de calcium ainsi que des anions carbonates. L'apport de brucite permet de libérer en plus des anions hydroxyde, ce qui permet de contrôler plus efficacement un pH trop acide. Le choix des espèces minérales selon l'invention permet une dissociation progressive de la substance de sorte que celle-ci ne puisse avoir lieu que si elle est utile au milieu biologique.

Comme représenté à la figure 1, il est possible d'injecter dans le bassin d'aération (1) une poudre minérale pressurisée (50), par le biais d'un matériel adapté de type venturi ou tout autre dispositif permettant le mélange homogène entre un liquide et la poudre minérale pressurisée (50). Cette poudre (50) comprend un ou plusieurs composés parmi la calcite, la dolomite, la magnésite ou la brucite. La taille des particules de la substance minérale est inférieure à 50 $\mu$m.

L'injection de la substance pulvérulente pressurisée peut être réalisée après mouillage au cours du déchargement d'un camion avec la liqueur mixte issu du bassin d'aération (1). A titre d'exemple, la dose nécessaire est comprise entre 0,5 et 1 fois la masse de boue exprimée en MVS. Cette quantité peut être ajustée en fonction de l'objectif de performances et/ou déterminée après quelques essais. La substance minérale à mélanger avec la biomasse (5) a une densité déterminée comprise entre 2,4 et 3 g/cm$^3$, et de préférence entre 2,6 et 3 g/cm$^3$. Une telle densité est nettement supérieure à la densité de l'eau à traiter (c'est-à-dire supérieure à 1g/cm$^3$). Ainsi, la densité obtenue pour les flocs mixtes formés grâce à l'ajout de la substance minérale dans la phase contenant la biomasse (5) est suffisamment élevée pour que la séparation de la biomasse (5) par rapport à la phase aqueuse à extraire (4) soit rapide et efficace.

Le procédé selon l'invention peut permettre d'injecter la substance minérale sans mouillage préalable car le ou les composés de cette substance se dispersent très facilement. Dans un mode de réalisation, l'injection est réalisée en utilisant un tuyau d'injection (15) d'un diamètre de 80 mm par exemple pourvu d'un raccord classique de canalisation, type «pompier» ou analogue. Ce tuyau (15) peut être disposé de manière à présenter un angle ($\alpha$) de 20° à 30° avec l'horizontale, débouchant par exemple à une profondeur (H1) de 50 cm sous le niveau du bassin et en amont d'un agitateur de fond. La distance horizontale (H2) par rapport à l'agitateur peut être de 2 à 3 m en fonction des dimensions de l'ouvrage. Plus généralement l'étape de mélange comprend donc au préalable une injection dans le bassin d'aération (1) d'une poudre (50) incluant la substance minérale pulvérulente, avantageusement réalisée à au moins 20 cm sous le niveau de surface du bassin d'aération (1).

Comme illustré à la figure 1, le bassin d'aération (1) est agité par l'intermédiaire de moyens d'agitation (10) immergés près du fond. Il est également recommandé de faire fonctionner des aérateurs de surface (turbines, brosses...) pendant toute la période d'injection. D'autres appareillages d'agitation connus de l'homme du métier sont naturellement envisageables. Dans un mode de réalisation de l'invention, la pression d'injection est de l'ordre de 1 bar. Dans de telles conditions, il peut être introduit plus de 25 tonnes de la substance minérale pulvérulente dans le bassin d'aération (1) en moins de 30 minutes, le brassage du bassin devant être maximal pendant toute la durée de l'opération de déchargement. Ce opératoire est à conseiller dans tous les cas où l'on doit améliorer, de façon ponctuelle et urgente, la décantation des boues (6).

Dans une variante de réalisation, on peut également préparer un lait de substance minérale selon l'invention, par exemple à partir d'un silo de stockage, en l'injectant régulièrement, par exemple de manière hebdomadaire, l'injection étant déterminée en tenant compte de la fraction minérale éliminée au travers des boues extraites entre deux apports, ce qui permet de maintenir un niveau d'efficacité constant et même croissant.

Suivant une autre particularité, l'eau de la suspension peut être remplacée avantageusement par la liqueur mixte. On observe de manière surprenante que les matières organiques électronégatives présentes dans la biomasse (5) s'opposent à l'agrégation des particules minérales entre elles, on limite ainsi fortement la sédimentation de ces dernières sur le fond de la cuve. Dans cette variante de réalisation, le rapport massique peut approcher les 10 kg de poudre injectée par kg de matière volatile sèche. Une agitation lente est maintenue. Dans ces conditions, l'apport peut également se faire en surface, en pulvérisant le lait par l'intermédiaire, par exemple, d'une rampe d'aspersion.

Suivant le pourcentage d'agent lestant dans la biomasse (5), déterminé en fonction de l'objectif défini à partir des critères de sédimentation ou d'amendement basique et calcique ou magnésien, un gain de plus de 50 % sur la capacité hydraulique de la station d'épuration peut être obtenu par rapport à l'utilisation d'une décantation classique. Le pourcentage d'augmentation de débit de pointe sur deux heures peut dépasser les 100%.

L'homme de l'art, à partir d'un simple test de décantation en éprouvette est capable de déterminer la vitesse ascensionnelle limite Vas d'un clarificateur (2) et, connaissant la surface de l'ouvrage, le débit maximal admissible. En situation limite, toute augmentation du débit impliquera des départs de boues, le débit de pointe devra donc être inférieur ou égal à ce débit maximal. Par contre un gain de 50 % obtenu sur la vitesse de décantation se traduira par un abaissement du voile de boue, libérant une hauteur d'eau clarifiée (H3) suffisamment importante en surface de l'ouvrage pour faire face à une pointe de débit pouvant dépasser 100% du débit maximal initial.

Le test de décantation en éprouvette d'un litre est une méthode fiable pour apprécier les capacités hydrauliques d'un clarificateur (2) et représente un moyen indiscutable de mesurer les effets du lestage sur la vitesse de sédimentation des boues (6) ou de comparer les agents lestant entre eux. Cette méthode est retenue dans ce qui suit pour traduire les effets observés au cours des essais.

Le protocole est le suivant :

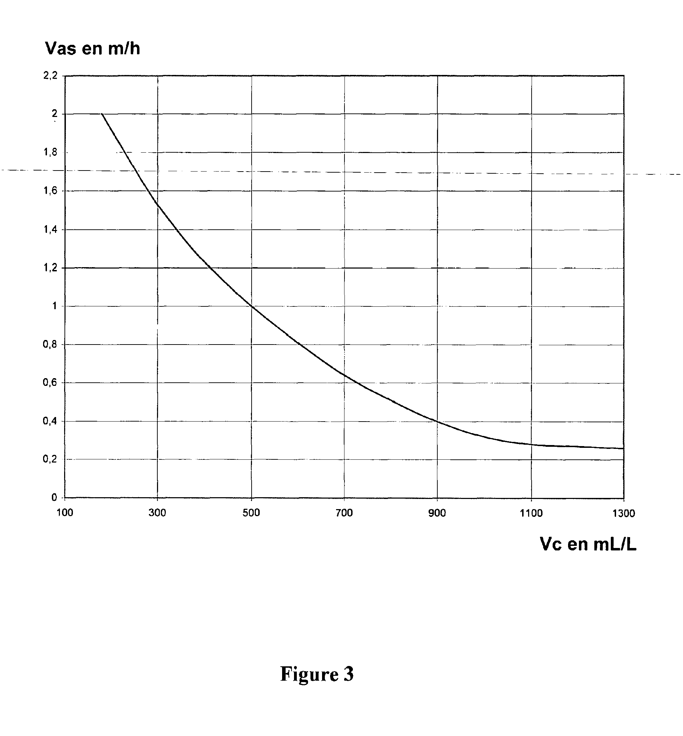

On procède à la dilution avec de l'eau clarifiée d'un certain volume de liqueur mixte prélevé dans le bassin d'aération (1) en fin d'une phase d'homogénéisation de sorte qu'à l'issue d'une période de décantation de 30 minutes, le volume de boue sédimenté soit compris entre 100 mL et 250 mL, (sinon, modifier la dilution). On note la valeur exacte du volume $V_{D30}$, (volume décanté au bout de 30 minutes) que l'on multiplie par le coefficient de dilution. Le résultat ainsi obtenu représente le volume corrigé $V_c$. Cette donnée fondamentale figure en abscisse de la courbe publiée par le CEMAGREF reliant la vitesse ascensionnelle limite Vas du clarificateur (à flux vertical, le plus répandu) en fonction du volume corrigé Vc. Cette courbe est illustrée à la figure 3.

Le volume corrigé Vc est également le produit de l'indice de boue (IB ou SVI pour Sludge Volume Index) par la concentration $C_{BA}$ en biomasse (5) du bassin d'aération (1) exprimée en MeS (Matières en Suspension).

$$V_c = V_{D30} \times \text{Coefficient de Dilution}$$

et

$$V_c = IB \times (C_{BA})_{MeS}$$

L'indice de boue caractérise véritablement la capacité d'une boue à décanter ; à partir de 200 mL/g, on commence à évoquer le foisonnement de la biomasse (5) même si les problèmes se manifestent souvent au-delà de 250 mL/g de MeS en fonction de la charge hydraulique et de la concentration en biomasse (5) du bassin d'aération (1). Dans le cas du lestage des boues avec une substance minérale, stable à 550°C, l'influence des matières minérales surajoutées sur les matières en suspension est si élevée qu'il est plus juste de devoir exprimer $C_{BA}$ sur la base des MVS représentatives de la matière biologique, $(C_{BA})_{MVS}$ restant constante après lestage. On prendra soin de procéder avant lestage à la proportion respective de matière minérale et de matière volatile sèche de la boue activée et définie comme une caractéristique de la biomasse (5) de manière à exprimer IB après lestage.

$$IB_{MVS} = Vc / (C_{BA})_{MVS}$$

et

$$IB = IB_{MVS} \times \text{(la fraction volatile avant lestage)}$$

On utilisera ces formules pour apprécier à la fois la concentration en biomasse (5) du bassin d'aération $(C_{BA})_{MVS}$ ainsi que la concentration en matière minérale du milieu donné par :

$$(C_{BA})_{MM} = (C_{BA})_{MeS} - (C_{BA})_{MVS}$$

Quant aux matières minérales surajoutées ( lest ) :

$$(C_{BA})_{lest} = (C_{BA})_{MM} - (C_{BA})_{MVS} \times \left[ \frac{1}{\text{(fraction volatile av. lestage)}} - 1 \right]$$

Ces données permettront le suivi des paramètres nécessaires à la gestion de la station d'épuration. Il est possible à partir de telles données de comparer les effets du lestage sur un cas concret et observer l'évolution du volume corrigé et de l'indice de boue.

Pour les expérimentations qui suivent, la liqueur d'aération est prélevée sur une station d'épuration considérée comme traitant des effluents agroalimentaires de 40000 habitants. Pour une de valeur 4 g/l pour la concentration en biomasse (5) du bassin d'aération (1) exprimée en MeS, et une fraction organique de 85%, on déduit la concentration suivante en MVS :

$$(C_{BA})_{MVS} = 3{,}4 \text{ g/L}$$

Le test de décantation à l'éprouvette après une dilution de 5 fois (200 ml de boues dans 1000 mL) indique que $V_{D30} = 220$ mL. Le coefficient de dilution étant de 5, on obtient le volume corrigé Vc :

$$V_C \approx 220 \times 5 = 1100 \text{ mL/L}$$

La courbe de la figure 3 apporte les renseignements sur la vitesse ascensionnelle limite : $V_{AS} < 0{,}30$ m/h.

La surface au miroir du clarificateur (2) étant de 400 m², une fois déduite la surface de la zone de tranquilisation centrale ou clifford, le débit maximal ressort à :

$$Q_{MAX} = S \times V_{AS} \quad \text{soit } Q_{MAX} < 400 \times 0.30 \text{ d'où } Q_{MAX} < 120 \text{ m}^3/\text{h}$$

Cette valeur est faible et confirme le mauvais indice de boue IB = 1100 / 4 = 275 ml / g

Des essais de lestage ont été réalisés à partir d'une substance minérale conforme à la présente invention à base de calcite et constituée de particules calibrées pour avoir une dimension caractéristique comprise entre 5 et 40 μm que l'on nommera ci-après **LESTOFLOC**, une poudre minérale à base de talc et nommée **AQUATAL**® ainsi qu'un coagulant organique utilisé seul ou en association avec les deux poudres.

La mesure s'effectue au travers du volume corrigé Vc et l'analyse par comparaison au $V_C$ de l'exemple précédent qui servira de « blanc ». Le mélange doit être agité vigoureusement en retournant l'éprouvette de haut en bas environ 10 fois après avoir fermé l'orifice.

Exemple 1 : il s'agit de l'essai de référence ou « blanc » ; on introduit 200 mL de liqueur d'aération et 800 mL d'eau clarifiée ; après 30 minutes, le volume corrigé obtenu est le suivant: $V_C = 220 \times 5 = 1100$ mL/L.

Exemple 2 : les conditions de l'exemple 1 sont reprises en ajoutant en outre 0,8 g de poudre **AQUATAL**® ; le volume corrigé obtenu est le suivant : $V_C = 160 \times 5 = 800$ mL/L.

Exemple 3 : les conditions de l'exemple 1 sont reprises en ajoutant en outre 0,8 g de poudre LESTOFLOC ; le volume corrigé obtenu est le suivant: $V_C = 160 \times 5 = 800$ mL/L.

Exemple 4 : les conditions de l'exemple 1 sont reprises en ajoutant en outre 1mL de solution diluée de coagulant ; le volume corrigé obtenu est le suivant : $V_C = 210 \times 5 = 1050$ mL/L.

Ladite solution de coagulant est préparée en diluant 0,5 mL de solution commerciale **ZETAG** 7197 de la société CIBA dans un litre d'eau potable.

Exemple 5 : les conditions de l'exemple 2 sont reprises en ajoutant en outre 1mL de la solution diluée de coagulant ; le volume corrigé obtenu est le suivant : $V_C = 155 \times 5 = 775$ mL/L.

Exemple 6 : les conditions de l'exemple 3 sont reprises en ajoutant en outre 1 ml de la solution diluée de coagulant ; le volume corrigé obtenu est le suivant : $V_C = 150 \times 5 = 750$ mL/L.

## Commentaires

Le lestage des boues (6) au moyen de minéraux pulvérulents est très efficace en particulier si l'on ajoute une très faible dose de coagulant. Aucun des deux minéraux ne se détache de l'autre même si LESTOFLOC semble mieux réagir à l'apport de coagulant. Ceci est probablement lié à l'amélioration de la coalescence pendant les premières minutes de décantation plus visible avec **LESTOFLOC** qu'avec **AQUATAL**®. Ce résultat est surprenant car la littérature () laissait penser que le carbonate de calcium était moins efficace que le talc ; cette amélioration in attendue serait due à la structure cristalline des particules. Le coagulant ne semble pas à lui tout seul améliorer la sédimentation de la biomasse sauf dans le cas d'une mauvaise coalescence du floc.

Le gain obtenu sur le débit est important puisque l'on passe d'un volume corrigé de 1100 à 750 mL/L.

La courbe de l'institut CEMAGREF (anciennement CTGREF) représentée à la figure 3 nous renseigne sur le nouveau débit maximal. En effet, la vitesse ascensionnelle limite Vas passe de 0,30 m/h à 0,60 m/h, soit 200 % du débit originel obtenu en quelques heures seulement.

L'utilisation d'un coagulant cationique organique, en association avec la substance minérale, peut être réalisée selon l'invention, au cours de la préparation du lait en ajoutant ce coagulant cationique organique à l'eau de la suspension (où il jouera plutôt un rôle de dispersant vis à vis des particules minérales cationiques). Cet additif améliorera les capacités d'adsorption et de cohésion de la biomasse (5) et favorisera la phase de coalescence du floc, étape nécessaire à la sédimentation tout en évitant la formation de flocons trop gros, trop rigides et de faibles densités. Cette synergie se révèle particulièrement efficace pour traiter un foisonnement filamenteux intense lors d'une injection unitaire massive (supérieure à 1,5 fois les MVS) ou lorsque l'on peut craindre une turbidité excessive de l'eau clarifiée. La quantité de coagulant est par exemple de l'ordre de 10 à 20 litres de produit commercial, que l'on diluera dans 10 fois son volume pour traiter 25 tonnes de biomasse en aération (ce qui peut revenir à environ 0,5 à 2 Kg / Tonne de biomasse (MVS) présente dans le système). Le choix du coagulant se fait parmi les coagulants cationiques organiques à faible poids moléculaire (par opposition notamment aux floculants, de haut poids moléculaire et à densité de charge souvent moins élevée). Ce choix varie en fonction du type de boue (6) et ne peut être déterminé qu'après essais. Un excès de coagulant augmente le caractère colloïdal et hydrophile de la biomasse ; ceci n'améliore pas toujours l'épaississement ni la déshydratation ultérieure des boues (6).

Le procédé selon l'invention utilise des composés très particuliers, notamment les carbonates de calcium et de magnésium comme la calcite, la dolomite et magnésite. Ces composants offrent des qualités de compatibilité biologique, de tendreté (3 sur l'échelle de Mohs pour la calcite), et ont de faibles solubilités dans l'eau pure, ce qui leur confère une bonne pérennité dans le milieu biologique. Le produit de solubilité Ks est seulement de $4,8\ 10^{-9}$ pour $CaCO_3$ dans l'eau pure (soit 7 g/m$^3$).

L'ion carbonate évoluera vers la forme bicarbonate en présence d'acide carbonique issu du métabolisme aérobie (CO2 + H2O). Face à une brutale diminution du pH, la dissociation du minéral utilisé selon la présente invention sera accélérée en évoluant de la même manière, neutralisant l'excès d'acidité. Comme le procédé suivant l'invention utilise ses composés sous une forme cristalline, en opposant une résistance suffisante à la solubilité, la substance gagne en pérennité et l'action des particules est prolongée. Au vu de la faible quantité d'ions carbonates en solution, ces derniers ne pourront s'accumuler car ils seront très rapidement transformés en bicarbonate. On restera donc dans le même système acido-basique qui prévalait avant l'injection de la substance minérale c'est à dire le couple $H_2CO_3$ / $HCO_3$. Le pH sera donc très peu modifié alors que le pouvoir tampon sera amélioré et le risque de précipitation sera écarté.

Le risque d'entartrage des matériels immergés sera d'autant plus négligeable que les particules minérales se comporteront comme des germes de cristallisation en cas de rupture de l'équilibre calco-carbonique dues à des conditions exogènes. Une partie du carbonate qui s'était préalablement dissous et transformé se régénèrera préférentiellement sur les particules.

On mesure tout l'intérêt d'un milieu biologique tamponné, notamment face à l'acidification qui accompagne la déphosphatation physico-chimique et la nitrification biologique. Une dureté temporaire élevée et un milieu qui tend vers l'équilibre calco-carbonique favorisent la biologie et la nitrification de l'azote. L'hydrolyse des graisses est également facilitée, surtout en présence de brucite, et les sels d'acides gras calciques et magnésiens limiteront les phénomènes de formation d'écumes et de moussage en évitant la génération d'acides gras libres.

Dans un mode de réalisation préféré de l'invention, l'affinité des composés constituant la poudre (50) vis à vis de la biomasse (5) doit être importante pour engendrer la formation de flocs mixtes denses en milieu aqueux.

Certaines formes trop pures ou obtenues par précipitation (blanc de Meudon, d'Espagne) doivent parfois être évitées, comme certaines craies micro-cristallines trop friables et insuffisamment denses ou trop réactives car trop poreuses. La sélection d'un gisement de calcite d'origine sédimentaire évoluant vers sa forme métamorphique comme certains calcaires ou bien le marbre (métamorphisme achevé) est préférable. La roche, naturellement compacte, doit par exemple manifester une réaction à l'acide diluée à froid modérée en terme de dégagement gazeux ; c'est en effet le signe que la structure cristalline est suffisamment forte, gage de pérennité. Les cristaux constituant la roche présentent une taille suffisante de telle sorte qu'ils puissent être au minimum confondus par leurs dimensions à la fraction basse des particules de la poudre minérale utilisée selon l'invention.

La substance minérale pulvérulente doit clairement apparaître comme étant constituée de particules cristallines rhomboédriques et identifiées comme tel. Le plus souvent, les calcaires et la craie, une fois pulvérisés apparaîtront comme étant constitués de particules sans forme géométrique caractéristique car les cristaux microscopiques sont liés par un ciment de carbonate à l'état colloïdal plus ou moins pur et poreux. La solubilité carbonique de ces espèces est très élevée et l'on ne doit pas conseiller leur usage dans un procédé de lestage de boue activée.

Certains éléments métalliques peuvent, à l'état d'impureté, jouer un rôle positif en limitant la solubilité de la substance. En effet, le fer, le manganèse, le magnésium peuvent permuter leurs atomes avec une partie du calcium sans modifier l'édifice cristallin, mais en le renforçant.

Les particules minérales utilisées dans la présente invention cristallisent dans le système rhomboédrique ; c'est le cas de la calcite comme la dolomite $CaMg(CO_3)_2$ ou la magnésite $(Mg\,CO_3)$. Cette dernière a une réaction très faible à l'acide à froid, gage de stabilité (ce que ne laissait pas présager son produit de solubilité Ks pourtant assez élevé). L'hydrophyllite (appelée communément brucite) de formule $Mg(OH)_2$, dont la dissociation est également très faible (Produit KS de $5\,10^{-12}$, soit 6,4 mg/L) peut également être utilisée dans une certaine proportion. Par rapport aux composés à base de carbonates, la densité de la brucite est légèrement inférieure, de l'ordre de 2,4 g/cm$^3$. Les composés à base de carbonates ont en effet une densité comprise entre 2,6 et 3 g/cm$^3$. De façon générale, la formule des composés carbonatés pouvant être utilisés dans le procédé de l'invention est du type :

$$Ca_xMg_y(CO_3)_z \text{ où } x+y = z$$

(x et y n'étant pas forcément des entiers naturels).

Naturellement, le contrôle des éléments indésirables tels que l'arsenic et les métaux lourds est indispensable pour une application dans les stations d'épuration qui valorisent leurs boues en agriculture. En outre, le taux de silice doit être faible pour d'évidents problèmes d'abrasion. De plus, la silice est fortement polaire donc très hydrophile et cette forte affinité pour l'eau va limiter son affinité pour la biomasse plus hydrophobe d'autant plus que sa polarité, négative, engendre une répulsion électrostatique entre la biomasse elle-même négative et ces particules. Alors que les particules carbonatées cristallines, moins polaires donc moins hydrophiles et électropositives auront une bonne affinité vis à vis de la biomasse. On pourra également modifier légèrement les caractéristiques de surface des particules en leur donnant un caractère hydrophobe plus marqué en incorporant de la poudre très fine de graphite ou de charbon actif dans la substance minérale (moins de 1% suffit) mais on limitera également la charge positive des particules.

Dans un mode de réalisation de l'invention, la poudre (50) obtenue après broyage de la roche doit être facile à fluidiser malgré la taille des particules de la substance minérale, inférieure à 50 µm (et supérieure à 5 µm). Cette propriété traduit le caractère cristallin des particules, les grains étant bien détachés les uns des autres.

Le degré d'affinité de la poudre minérale en suspension vis-à-vis de la biomasse (5) va déterminer à la fois le niveau de la charge maximum admissible sur le floc et la taille des grains. Au-delà d'un certain seuil (>50µm), la gravitation et l'énergie cinétique prennent le pas sur les forces de cohésion et les particules risquent de sédimenter au fond des bassins, en se séparant de la biomasse (5), en particulier pendant la phase d'aération quand l'agitation va déstructurer les flocons. A l'inverse, une granulométrie trop fine va favoriser la turbidité de l'eau clarifiée et entraîner une perte de matière préjudiciable à la qualité de l'eau (fuite de matières en suspension MeS), ainsi qu'entraîner une solubilité très élevée de ces espèces en particulier après une injection massive de poudre minérale.

Les particules minérales utilisées sont par exemple à l'état supracolloïdal, idéalement calibrées pour avoir une dimension caractéristique comprise entre 5 et 40 $\mu$m, l'indice D50 de répartition étant compris par exemple entre 10 et 15 $\mu$m. Les matières minérales peuvent être calibrées autour d'une valeur de référence de l'ordre de 15 $\mu$m.

Ces particules exercent une action coagulante en déchargeant partiellement les colloïdes du floc biologique alors que ce dernier exerce une action floculante à travers ses exo polymères en piégeant la poudre minérale (hétéro coagulation ou coagulation mutuelle). Les nouveaux flocons, de type mosaïque, sont bien plus compacts, plus denses. La rupture de coalescence pendant la phase d'aération, étape favorable aux échanges liquide-biomasse par augmentation de l'interface, est conservée, tandis que sa réversibilité au repos pendant la phase de clarification est préservée et améliorée. Le procédé selon l'invention permet par conséquent une réduction du volume des flocons associée à une augmentation de la masse des flocs. L'élévation de densité résultante est dès lors très favorable à la décantation de la boue activée, la biomasse (5) quittant la phase en surface correspondant à l'eau traitée (4), comme illustré sur la figure 2. Cette eau traitée (4) est évacuée par débordement ou acheminée par exemple vers une lagune (7) ou analogue ou un bassin de traitement tertiaire, ou rejoint directement le milieu naturel.

L'un des avantages de l'invention est d'utiliser des minéraux apportant un amendement basique et calcique ou magnésien aux boues (6) à valoriser, ce qui est d'un intérêt de tout premier ordre pour le milieu agricole. Au niveau du concentrateur (3), les avantages du procédé se manifestent par un meilleur épaississement statique.

Au niveau du traitement de déshydratation, on observe comme dans le cas de procédés connus, (Degrémont, Mémento technique de l'eau, 1978) ou l'on conditionne la boue grâce à l'apport d'une charge quelconque de matières solides en poudre ou broyées directement dans la boue à essorée, une amélioration de la filtrabilité et de la siccité ainsi que de la tenue en tas. Par contre, le volume final à transporter est très souvent inférieur de l'ordre de 10%, ce qui représente une économie appréciable. La réduction du volume de boue final ne trouve pas d'explication au travers de l'état connu de la science avec des espèces hydrophiles comme les carbonates même s'il est vrai que la littérature ne fait référence qu'à un mode éloigné d'association entre ces particules minérales et la biomasse puisque utilisées en tant que charge dans le cadre spécifique de la filière boue en vue d'une déshydratation et non pas au travers d'un procédé de lestage comme dans le cas de l'invention où la cohésion entre la biomasse et la matière minérale est plus importante.

Ainsi, comme le suggère la demande de brevet WO 2005/014495 dans un procédé spécifique de déshydratation des boues avec une substance minérale (dolomie semi-calcinée), l'augmentation surprenante de matière sèche des boues (et donc une réduction de volume) s'expliquerait par l'effet de la magnésie anhydre (MgO). Par comparaison, il n'est absolument pas suggéré d'employer du calcaire en poudre car ce type de phénomène n'est pas observé. Par ailleurs, la demande internationale WO 01/62679 A1 ne justifie la diminution de la résistance spécifique des boues que par la combinaison entre des espèces hydrophobes (talc) en forte proportion et associées à des espèces hydrophiles. C'est donc bien uniquement au travers du principe de lestage prévu dans la présente invention que l'on peut justifier cette propriété.

Le procédé de lestage suivant l'invention permet également une réduction sensible de la production de boue (jusqu'à 20%), en particulier avec des boues très organiques. Cet avantage est probablement lié à une minéralisation plus importante de la biomasse mais la raison n'est pas connue.

Par ailleurs, en réduisant le caractère colloïdal des boues, le séchage s'en trouve accéléré. On limite ainsi la formation d'une croûte qui s'oppose à l'évaporation en profondeur car la boue devient plus poreuse, plus friable. Ceci améliore le rendement des dispositifs de séchage, solaires en particulier.

**Revendications**

1. Procédé de lestage de boues activées où l'on fixe des particules minérales sur des flocs biologiques déjà constitués pour favoriser la décantation d'une biomasse composée de micro-organismes épurateurs d'une eau traitée biologiquement et permettant d'améliorer la valeur agronomique des boues, comprenant une étape de mélange avec la biomasse (5) d'une substance minérale pulvérulente pour former un floc mixte de densité supérieure au floc d'origine, **caractérisé en ce que** la substance minérale est sous forme de particules cristallines rhomboédriques, constituées de calcium et/ou de magnésium, associées à des carbonates et permettant, en opposant une résistance suffisante à la solubilité, la libération progressive en milieu aqueux des cations de magnésium et/ou de calcium, ainsi que des anions carbonate, les particules de ladite substance minérale ayant une granulométrie déterminée correspondant à une distribution caractéristique de particules comprise dans l'intervalle [ 5 - 40 $\mu$m ].

2. Procédé selon la revendication 1, dans lequel la formation du floc mixte est réalisée à partir d'une substance à mélanger ayant une densité déterminée comprise entre 2,6 et 3 g/cm$^3$ et comprenant au moins un des composés suivants sous la forme cristallisée :

- calcite ;
- dolomite.

**3.** Procédé selon la revendication 1 ou 2, **caractérisé en ce que** la biomasse (5) est mélangée avec une substance minérale de densité comprise entre 2,6 et 3 g/cm$^3$, dont la structure cristalline est rhomboédrique, et ayant une formule générale du type :

$$Ca_xMg_y(CO_3)_z$$

où x+y = z.

**4.** Procédé selon la revendication 1 ou 2, **caractérisé en ce que** la biomasse (5) est mélangée avec une substance minérale supplémentaire appelée brucite d'une densité de l'ordre de 2,4 g/cm$^3$, dont la structure cristalline est rhomboédrique, et ayant une formule générale du type $Mg(OH)_2$.

**5.** Procédé selon l'une des revendications 1 à 4, utilisé dans une station d'épuration et dans lequel la substance minérale pulvérulente est préparée pour être utilisée à l'état de suspension sous forme d'un lait minéral, l'eau de la suspension pouvant avantageusement être remplacée par la liqueur d'aération de la station, une étape d'injection ou de pulvérisation utilisant cette suspension étant réalisée pour traiter la biomasse (5).

**6.** Procédé selon l'une des revendications 1 à 5, **caractérisé en ce que** la substance minérale est introduite en une ou plusieurs fois dans un système biologique incluant la biomasse (5), la quantité de substance minérale introduite étant ajustée pour représenter de 0,3 à 3 fois la masse de boue biologique, exprimée en matière volatile sèche, présente dans le système biologique.

**7.** Procédé selon l'une des revendications 1 à 6, **caractérisé en ce que** les particules minérales utilisées sont calibrées autour d'une valeur de référence de l'ordre de 15 $\mu$m.

**8.** Procédé selon l'une des revendications 1 à 7, **caractérisé en ce qu'**un coagulant cationique organique est associé à la substance minérale.

**9.** Procédé selon une des revendications 1 à 8, **caractérisé en ce qu'**il est utilisé pour diminuer la production de boue d'une installation d'épuration biologique à boues activée.

**10.** Procédé selon une des revendications 1 à 9, **caractérisé en ce qu'**il est utilisé pour augmenter la vitesse de séchage des boues déshydratées.

**Figure 1**

**Figure 2**

**Vas en m/h**

**Vc en mL/L**

Figure 3

Office européen
des brevets

**RAPPORT DE RECHERCHE EUROPEENNE**

Numéro de la demande

EP 05 29 2393

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | PATENT ABSTRACTS OF JAPAN<br>vol. 016, no. 584 (C-1013),<br>24 décembre 1992 (1992-12-24)<br>& JP 04 235793 A (SHIKOKU CHEM CORP),<br>24 août 1992 (1992-08-24)<br>* le document en entier *<br>----- | 1-10 | C02F3/12 |

DOMAINES TECHNIQUES RECHERCHES (IPC)

C02F

Le présent rapport a été établi pour toutes les revendications

| Lieu de la recherche | Date d'achèvement de la recherche | Examinateur |
|---|---|---|
| Munich | 5 avril 2006 | Serra, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 2393

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-04-2006

| Document brevet cité<br>au rapport de recherche | Date de<br>publication | Membre(s) de la<br>famille de brevet(s) | Date de<br>publication |
|---|---|---|---|
| JP 04235793 A | 24-08-1992 | JP 2002508 C<br>JP 7010390 B | 20-12-1995<br>08-02-1995 |

EPO FORM P0460

Pour tout renseignement concernant cette annexe : voir Journal Officiel de l'Office européen des brevets, No.12/82

EP 1 785 400 A1

## RÉFÉRENCES CITÉES DANS LA DESCRIPTION

**Documents brevets cités dans la description**

- EP 0688303 A
- US 5759403 A
- FR 1816611
- DE 4207560

- JP 4235793 A
- WO 2005014495 A
- WO 0162679 A1